# EUROPÄISCHE PATENTSCHRIFT

(11) **EP 0 685 780 B1**
(45) Veröffentlichungstag und Bekanntmachung des Hinweises auf die Patenterteilung: **19.05.1999**
(21) Anmeldenummer: 95105388.3
(22) Anmeldetag: 10.04.1995
(51) Int. Cl.: G05D 16/20

(54) **Regeleinrichtung zur Einstellung des Drucks in einer mit Druck beaufschlagbaren Vorrichtung**
Regulating device for controlling the pressure in a pressure-driven apparatus
Dispositif de régulation pour contrôler la pression dans un appareil actionné par une pression

(30) Priorität: 03.06.1994 DE 9409033 U
(43) Veröffentlichungstag der Anmeldung: 06.12.1995
(73) Patentinhaber: FESTO AG & Co, 73734 Esslingen (DE)
(72) Erfinder: Stoll, Kurt, Dr., D-73732 Esslingen (DE); Göttert, Manfred, D-70327 Stuttgart (DE); Quendt, Volker, D-73734 Esslingen (DE)
(74) Vertreter: Vetter, Hans, Dipl.-Phys. Dr.

(56) Entgegenhaltungen:
- DE-A- 3 729 183
- DE-A- 3 734 955
- DE-A- 4 204 060
- GB-A- 2 202 652
- MEASUREMENT AND CONTROL, Bd.20, Nr.9, November 1987, LONDON GB Seiten 56 - 60 W. J. B. ARDEN ET AL. 'Remote boundary pressure control'

## Beschreibung

Die Erfindung betrifft eine Regeleinrichtung zur Einstellung des Drucks in einer mit Druck beaufschlagbaren Vorrichtung gemäß dem Oberbegriff des Anspruchs 1.

Derartige Druckregeleinrichtungen, bei denen ein den zu regelnden Druck erfassender Drucksensor an der mit Druck beaufschlagbaren Vorrichtung angeordnet ist, beispielsweise an einem Pneumatikzylinder oder einem Druckspeicher, sind aus der DE-A-42 04 060 bekannt. Auf Grund der oft langen Leitungen zwischen dem Ventil und dieser Vorrichtung reagiert der Sensor relativ träge auf Druckänderungen am Ventil, so daß bei diesen bekannten Regeleinrichtungen zur Vermeidung eines insgesamt instabilen Regelkreises zwei Regler einen Kaskadenregelkreis bilden, wobei der zweite Regler mit einem zweiten Drucksensor am Ausgang des Ventils verbunden ist.

Dieser Kaskadenregelkreis hat jedoch den Nachteil, daß die Totzonen der beiden Regelfehler der beiden Regler nicht unabhängig voneinander gewählt werden können, was die exakte Optimierung der Regler beeinträchtigt.

Eine Aufgabe der vorliegenden Erfindung besteht darin, die Nachteile der bekannten Regeleinrichtungen zu vermeiden, und eine Regeleinrichtung zu schaffen, die bei stabilem Regelkreis möglichst fehlerfrei den Druck in einer druckbeaufschlagten Vorrichtung regelt.

Diese Aufgabe wird erfindungsgemäß durch die Merkmale des Anspruchs 1 gelöst.

Die parallel geschalteten Regler gemäß der vorliegenden Erfindung haben den Vorteil, daß die Totzonen der beiden Regelfehler unabhängig voneinander gewählt werden können. Diese Entkopplung der Totzonen ist bei der bekannten Kaskadenstruktur nicht gegeben und gestattet eine unabhängige Optimierung der beiden Totzonen und damit eine verbesserte Druckregelung.

Durch die in den Unteransprüchen aufgeführten Maßnahmen sind vorteilhafte Weiterbildungen und Verbesserungen der im Anspruch 1 angegebenen Regeleinrichtung möglich.

Der zweite Drucksensor ist zweckmäßigerweise unmittelbar am oder im Ventil angeordnet, wobei eine Druckleitung zwischen der Anschlußstelle des zweiten Drucksensors und der Vorrichtung vorgesehen ist. Durch die erfindungsgemäße Anordnung kann diese Druckleitung eine große Länge bei einem entsprechenden Druckabfall aufweisen, wobei dennoch ein sehr geringer Regelfehler erreicht wird.

In einer vorteilhaften Anordnung sind die Ausgänge der beiden Regler zusammengeführt, insbesondere an eine Summationsstelle angeschlossen, die mit dem Ventil verbunden ist.

Die beiden Drucksensoren sind dabei mit den Eingängen der Regler vorgeschalteten Summationsstellen verbunden, denen jeweils auch ein Sollwert zugeführt wird.

Als Regler eignen sich insbesondere P-Regler, die eine Totzone aufweisen. Zum Ausgleich einer Hysterese eignet sich eine den Reglern nachgeschaltete Hysterese-Kompensationseinrichtung.

Das Stellglied ist vorzugsweise als Pulsweiten-Modulator ausgebildet.

Für derartige Regelungen werden vorzugsweise Proportionalventile eingesetzt.

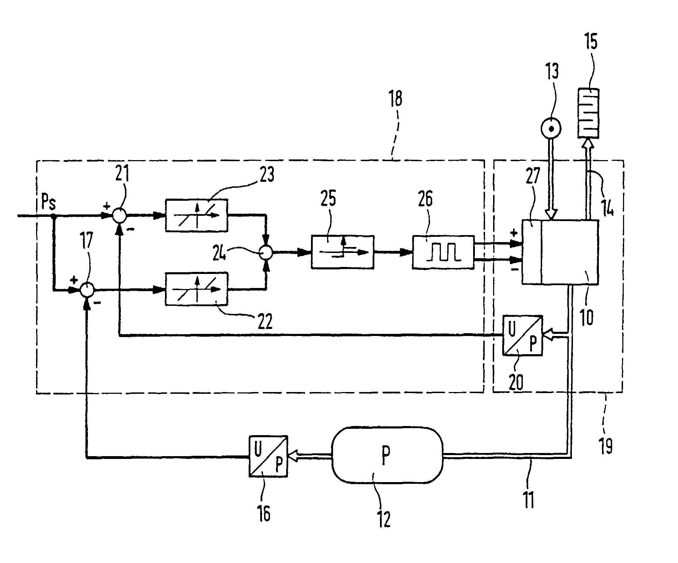

Ein Ausführungsbeispiel der Erfindung ist in der Zeichnung dargestellt und in der nachfolgenden Beschreibung näher erläutert. Die einzige Figur zeigt ein Blockschaltbild eines ersten Ausführungsbeispiels mit parallelgeschalteten Reglern.

Bei dem in der Figur dargestellten ersten Ausführungsbeispiel ist ein pneumatisches Proportional-Druck-Regelventil 10 (im folgenden als Ventil 10 bezeichnet) über eine Druckleitung 11 mit einem Druckbehälter 12 verbunden, dessen Innendruck P auf einen Sollwert Ps geregelt werden soll. Das Ventil 10 ist mit einer Druckquelle 13 und über eine Entlüftungsleitung 14 mit einem Ausgangs-Schalldämpfer 15 verbunden. Zur Druckerhöhung kann der Druckbehälter 12 über das Ventil mit der Druckquelle 13 und zur Druckabsenkung mit der Entlüftungsleitung 14 verbunden werden.

Der Druckbehälter 12 ist lediglich als Beispiel für eine mit Druck beaufschlagbare Vorrichtung angegeben. Hierbei kann es sich beispielsweise auch um eine Kolben-Zylinder-Anordnung, einen Linearantrieb, einen fluidischen Motor, ein fluidisches Stellglied od.dgl. handeln. Dabei ist die Erfindung nicht auf ein pneumatisches Drucksystem beschränkt, sondern es kann auch eine hydraulische Anordnung in entsprechender Weise vorgesehen sein. Anstelle eines Proportionalventils kann prinzipiell auch ein anderes Ventil treten.

Am Druckbehälter 12 ist ein erster Drucksensor 16 zur Erfassung des Innendrucks angeordnet. Dieser Drucksensor 16 erzeugt eine druckabhängige Spannung U, die einer ersten Summationsstelle 17 einer elektronischen Regelanordnung 18 zugeführt wird. In einem das Ventil 10 aufnehmenden, schematisch durch gestrichelte Linien dargestellten Ventilgehäuse 19 ist ein zweiter entsprechender Drucksensor 20 angeordnet, der den Druck in der Druckleitung 11 unmittelbar am Ventil 10 erfaßt und eine druckabhängige Spannung U einer zweiten Summationsstelle 21 der Regelanordnung 18 zuführt. Dieser zweite Drucksensor 20 kann auch am Ventilgehäuse angeordnet sein.

Beiden Summationsstellen 17, 21 wird der einzuregelnde Druck-Sollwert Ps zugeführt. Die in den Summationsstellen 17, 21 gebildete Regelabweichung wird zwei P-Reglern 22, 23 zugeführt, die eine Totzone aufweisen. Für besondere Regelanwendungen können selbstverständlich entsprechend angepaßte Regler mit anderem Regelverhalten eingesetzt werden.

Die Ausgänge der beiden P-Regler 22, 23 sind an einer dritten Summationsstelle 24 zusammengeführt, und die entsprechenden Signale liegen als additive Größe am Eingang einer Hysterese-Kompensationseinrichtung 25 an. Deren Ausgang steuert die Pulsweite eines Pulsweiten-Modulators 26, der seinerseits alternativ auf die den beiden Stellrichtungen zugeordneten Steuereingänge einer Vorsteuerstufe 27 des Ventils 10 einwirkt. Entsprechend der geforderten Steuerleistung im Ventil kann auch noch wenigstens eine Leistungsstufe nachgeschaltet sein.

Die beiden Regler 22, 23 arbeiten unabhängig voneinander einmal in Abhängigkeit des erfaßten Drucks am Druckbehälter 12 und andererseits in Abhängigkeit des erfaßten Drucks am Druckausgang des Ventils 10. Die beiden Stellgrößen werden einer dritten Summationsstelle 24 überlagert und bilden eine Stellgröße, die unabhängig von den Druckunterschieden an den Meßpunkten einen stabilen Regelkreis bei geringem Regelfehler gewährleistet. In Abhängigkeit dieser Stellgröße wird dann im Pulsweiten-Modulator 26 ein pulsweitenmoduliertes Steuersignal erzeugt, durch das das Ventil 10 aufgesteuert oder zugesteuert wird.

## Patentansprüche

1. Regeleinrichtung zur Einstellung des Drucks in einer mit Druck beaufschlagbaren Vorrichtung (12) mittels eines an einer Druckquelle (13) angeschlossenen Ventils (10), mit einem an der Vorrichtung (12) angeordneten ersten Drucksensor (16) zur Bildung der Regelgröße für einen Regler (22), der mit dem Ventil (10) verbunden ist und auf dieses einwirkt, und mit einem zweiten Drucksensor (20) am mit der Vorrichtung (12) verbundenen Ausgang des Ventils (10) zur Bildung einer zweiten Regelgröße, die einem weiteren, auf das Ventil (10) einwirkenden Regler (23) zugeführt ist, dadurch gekennzeichnet, daß die Ausgänge der beiden parallel geschalteten Regler (22, 23) zusammengeführt sind.

2. Regeleinrichtung nach Anspruch 1, dadurch gekennzeichnet, daß der zweite Drucksensor (20) unmittelbar am oder im Ventil (10) angeordnet ist, wobei eine Druckleitung (11) zwischen der Anschlußstelle des zweiten Drucksensors (20) und der Vorrichtung (12) vorgesehen ist.

3. Regeleinrichtung nach Anspruch 1 oder 2, dadurch gekennzeichnet, daß die Ausgänge der beiden Regler (22, 23) an eine Summationsstelle (24) angeschlossen sind, die mit dem Ventil (10) verbunden ist.

4. Regeleinrichtung nach einem der vorhergehenden Ansprüche dadurch gekennzeichnet, daß die beiden Drucksensoren (16, 20) mit den Eingängen der Regler (22, 23) vorgeschalteten Summationsstellen (17, 21) verbunden sind, denen jeweils auch ein Sollwert (Ps) zugeführt ist.

5. Regeleinrichtung nach einem der vorhergehenden Ansprüche, dadurch gekennzeichnet, daß die Regler (22, 23) als P-Regler ausgebildet sind.

6. Regeleinrichtung nach Anspruch 5, dadurch gekennzeichnet, daß die Regler (22, 23) eine Totzone aufweisen.

7. Regeleinrichtung nach einem der vorhergehenden Ansprüche, dadurch gekennzeichnet, daß den Reglern (22, 23) eine Hysterese-Kompensationseinrichtung (25) nachgeschaltet ist.

8. Regeleinrichtung nach einem der vorhergehenden Ansprüche, dadurch gekennzeichnet, daß dem Ventil (10) ein Pulsweiten-Modulator (26) vorgeschaltet ist.

9. Regeleinrichtung nach einem der vorhergehenden Ansprüche, dadurch gekennzeichnet, daß das Ventil (10) als Proportionalventil ausgebildet ist.

## Claims

1. Control unit for adjusting the pressure in a device (12) which can be supplied with pressure by means of a valve (10) connected to a pressure source (13), with a first pressure sensor (16) mounted on the device (12) to form the controlled variable for a regulator (22) which is connected to and acts on the valve (10), and with a second pressure sensor (20) at the output of the valve (10) connected to the device (12) to form a second controlled variable which is fed to a further regulator (23) acting on the valve (10), characterized in that the outputs of the two regulators (22, 23) connected in parallel are guided together.

2. Control unit according to claim 1, characterized in that the second pressure sensor (20) is located directly on or in the valve (10), while a pressure line (11) is provided between the connection point of the second pressure sensor (20) and the device (12).

3. Control unit according to claim 1 or 2, characterized in that the outputs of the two regulators (22, 23) are connected at a summation point (24) which is connected to the valve (10).

4. Control unit according to any of the preceding claims, characterized in that the two pressure sensors (16, 20) are connected to the summation points (17, 21), which are also supplied with a reference value (Ps), upstream of the inputs of the regulators (22,23)

5. Control unit according to any of the preceding claims, characterized in that the regulators (22, 23) are in the form of P-regulators.

6. Control unit according to claim 5, characterized in that the regulators (22, 23) have a dead zone.

7. Control unit according to any of the preceding claims, characterized in that an hysteresis compensation device (25) is connected downstream of the regulators (22, 23).

8. Control unit according to any of the preceding claims, characterized in that a pulse-width modulator (26) is connected upstream of the valve (10).

9. Control unit according to any of the preceding claims, characterized in that the valve (10) is designed as a proportional valve.

## Revendications

1. Equipement de régulation destiné au réglage de la pression dans un dispositif (12) pouvant être alimenté en pression, au moyen d'une soupape (10) raccordée à une source de pression (13), comportant un premier capteur de pression (16) monté sur le dispositif (12), destiné à former la grandeur de régulation pour un régulateur (22), qui est relié à la soupape (10) et qui agit sur celle-ci et comportant un deuxième capteur de pression (20), à la sortie de la soupape (10) reliée au dispositif (12), destiné à la formation d'une deuxième grandeur de régulation, qui est envoyée à un régulateur (23) complémentaire agissant sur la soupape (10), caractérisé en ce que les sorties des deux régulateurs (2, 23) montés en parallèle sont réunies.

2. Equipement de régulation selon la revendication 1, caractérisé en ce que le deuxième capteur de pression (20) est monté directement sur ou dans la soupape (10), un conduit de pression (11) étant prévu entre le point de raccordement du deuxième capteur de pression (20) et le dispositif (12).

3. Equipement de régulation selon la revendication 1 ou 2, caractérisé en ce que les sorties des deux régulateurs (22, 23) sont raccordées à un point de sommation (24) qui est relié à la soupape (10).

4. Equipement de régulation selon l'une des revendications précédentes, caractérisé en ce que les deux capteurs de pression (16, 20) sont reliés à des points de sommation (17, 21) montés en amont des entrées des régulateurs (22, 23), points à chacun desquels est envoyée aussi une valeur de consigne (Ps).

5. Equipement de régulation selon l'une des revendications précédentes, caractérisé en ce que les régulateurs (22, 23) sont réalisés en tant que régulateurs proportionnels.

6. Equipement de régulation selon la revendication 5, caractérisé en ce que les régulateurs (22, 23) présentent une zone neutre.

7. Equipement de régulation selon l'une des revendications précédentes, caractérisé en ce qu'un dispositif de compensation d'hystérésis (25) est monté en aval des régulateurs (22, 23).

8. Equipement de régulation selon l'une des revendications précédentes, caractérisé en ce qu'un modulateur d'impulsions en largeur (26) est monté en amont de la soupape (10).

9. Equipement de régulation selon l'une des revendications précédentes, caractérisé en ce que la soupape (10) est réalisée en tant que soupape proportionnelle.
